# EUROPEAN PATENT SPECIFICATION

(11) **EP 2 075 146 B1**
(45) Date of publication and mention of the grant of the patent: **12.02.2014**
(21) Application number: 08172884.2
(22) Date of filing: 24.12.2008
(51) Int. Cl.: B60G 21/05

(54) **Twist-beam rear axle and method for producing a cross member**
Verbundlenkerachse und Verfahren zur Herstellung eines Querträgers
Essieu de torsion arrière et procédé pour produire une traverse

(30) Priority: 28.12.2007 IT TO20070165 U
(43) Date of publication of application: 01.07.2009
(73) Proprietor: Sistemi Sospensioni S.p.A., 20011 Corbetta (Milano) (IT)
(72) Inventor: Alesso, Guido, 12038 Savigliano (Cuneo) (IT); D'Aponte, Armando, 15100 Alessandria (IT); Monchiero, Piero, 10137 Torino (IT); Santini, Andrea, 10093 Collegno (Torino) (IT)
(74) Representative: Rondano, Davide

(56) References cited:
- EP-A2- 1 454 776
- WO-A1-2006/096980
- DE-A1-102004 003 152
- JP-A- 2001 088 525
- US-A1- 2007 069 496

## Description

The present invention refers to a cross-member for a twist-beam axle rear suspension for a motor vehicle.

Motor-vehicle twist-beam axle rear suspensions are known which basically comprise a central cross-member and a pair of trailing arms which are rigidly connected to the opposite transverse ends of the cross-member and carry respective members for support of the rear wheel axles and members for attachment to the vehicle body. While the trailing arms can be considered as infinitely rigid components, in that they are subject to negligible deformations in normal load conditions, the cross-member must have, on the other hand, a certain compliance, particularly under torsion, to allow the trailing arms to rotate elastically with respect to one another about the axis of the cross-member, i.e. about an axis substantially perpendicular to the travelling direction of the vehicle.

Since the length of the cross-member is basically imposed by the specific application, as it is linked to the vehicle tread, the torsional stiffness of the cross-member can be changed to take a given design value simply by properly shaping the cross-section of the cross-member itself. In this connection, the cross-members currently used in the motor-vehicle twist-beam axle suspensions can be classified into two distinct categories. On the one hand, there are open-section cross-members consisting of a sheet-metal beam which is generally obtained by stamping or other plastic deformation process and has an open cross-section with an outline of a variety of shapes, for instance of C-, U-, V- or Ω-like shape. On the other hand, there are closed-section cross-members consisting of a metal tubular beam which is plastically deformed, for instance by hydroforming process, so that its cross-section is given a predetermined shape such as to provide the beam with the desired torsional stiffness characteristics.

The first category of cross-members mentioned above has the advantage of being easy to manufacture and of being therefore inexpensive, but it is affected by the shortcoming of not making it possible to achieve the torsional stiffness values normally required. In order to compensate for the reduction in torsional stiffness of the open-section beam, a torsion bar is therefore normally added which is typically formed by a metal tubular element of either solid or hollow cross-section, which is securely connected at its opposite ends to the two trailing arms. By virtue of the use of a torsion bar acting in parallel to the open-section beam, a cross-member is obtained the overall torsional stiffness of which is the sum of the torsional stiffnesses of the open-section beam and of the torsion bar. A proper design of the torsion bar makes therefore possible to achieve the required value of torsional stiffness of the cross-member. The torsion bar is however an expensive component and hence its use greatly affects the overall cost of the cross-member.

The second category of cross-members mentioned above has on the other hand the advantage of making it possible to achieve high stiffness values without requiring to add a torsion bar. However, also this solution clearly has a higher cost than that of a simple open-section beam.

International Patent application WO2006/096980 discloses a cross-member for a twist-beam axle rear suspension for a motor vehicle comprising a first beam element of sheet metal having an inverted U-shape open section and a second beam element, also having an open section, rigidly connected to the first beam element to form with this latter a chamber having a closed cross-section which is suitably shaped to provide the cross-member with the required torsional stiffness. Since a portion of cross-member having a closed section is obtained by virtue of the joining of two open-section beam elements, it is possible to increase the overall torsional stiffness of the cross-member with respect to a cross-member consisting only in the first beam element having an inverted U-shape open section, as would be possible to obtain by adding a torsion bar, but at a significantly lower cost.

A similar cross-member for a twist-beam axle rear suspension for a motor vehicle is known from European Patent application EP1454776.

It is an object of the present invention to provide a cross-member for a twist-beam axle rear suspension for a motor vehicle which makes it possible to define in a controlled manner the torsional stiffness and the position of the axis of rotation of the cross-member and which can be manufactured at a low cost.

This object is fully achieved according to the invention by virtue of a cross-member having the characteristics set forth in the enclosed independent claim 1.

Further advantageous characteristics of the invention are specified in the dependent claims, the content of which is to be regarded as integral and integrating part of the present specification.

In short, the invention is based on the idea of providing a cross-member consisting in a pair of open-section beam elements which are suitably shaped and firmly secured to each other so as to enclose a chamber having a closed cross-section, the shape and size of which are such as to provide the cross-member with the desired torsional stiffness, wherein the first beam element has a cross-section with a pair of parallel bases, that is, a longer base and a shorter base, respectively, a first side adjacent to the shorter base and oriented obliquely thereto and a second side joining the first side to the longer base, and wherein the second beam element has a cross-section with a first side which is oriented parallel to the two bases of the first beam element and is firmly secured to the longer base of the first beam element and with a second side which is firmly secured to one of the two sides of the first beam element.

According to a first preferred embodiment, the second side of the first beam element extends perpendicularly to the two bases, the second beam element has a substantially L-shaped cross-section, and the second side of the second beam element is oriented perpendicularly to the first side and is firmly secured to the second side of the first beam element, in such a manner that the closed cross-section chamber is defined between the joining area between the longer base and the second side of the first beam element and the joining area between the two sides of the second beam element.

According to another preferred embodiment, the second side of the first beam element is curved, the cross-section of the second beam element has a third curved side which joins the first and second sides and the second side of the second beam element extends parallel to the first side of the first beam element and is firmly secured thereto, in such a manner that the closed cross-section chamber is defined between the two curved sides of the two beam elements.

The two beam elements are both advantageously made of sheet metal and are joined to each other by welding at the two free edges of the two sides of the second beam element.

Alternatively, the two beam elements may be made of different materials, for instance the one of sheet metal and the other of carbon fibre, and be joined to each other by gluing or riveting.

The two beam elements may be of different thickness in order to obtain a reduction in the cost and weight of the cross-member, the performances remaining the same.

The characteristics and advantages of the invention will result more clearly from the following detailed description, given purely by way of non-limiting example with reference to the appended drawings, in which:
Figure 1 is a perspective view of a twist-beam axle for a rear suspension of a motor vehicle having a cross-member according to a first preferred embodiment of the present invention;
Figure 2 is a perspective view of the cross-member of the twist-beam axle of Figure 1;
Figure 3 is a cross-section view of the cross-member of Figure 2, taken at the middle of the length of the cross-member; and
Figure 4 is a cross-section view of a cross-member according to another preferred embodiment of the present invention.

In the following description and claims, terms such as "longitudinal" and "transverse", "inner" and "outer", "front" and "rear", "upper" and "lower" etc. are to be intended as referred to the mounted condition of the cross-member onto the motor vehicle.

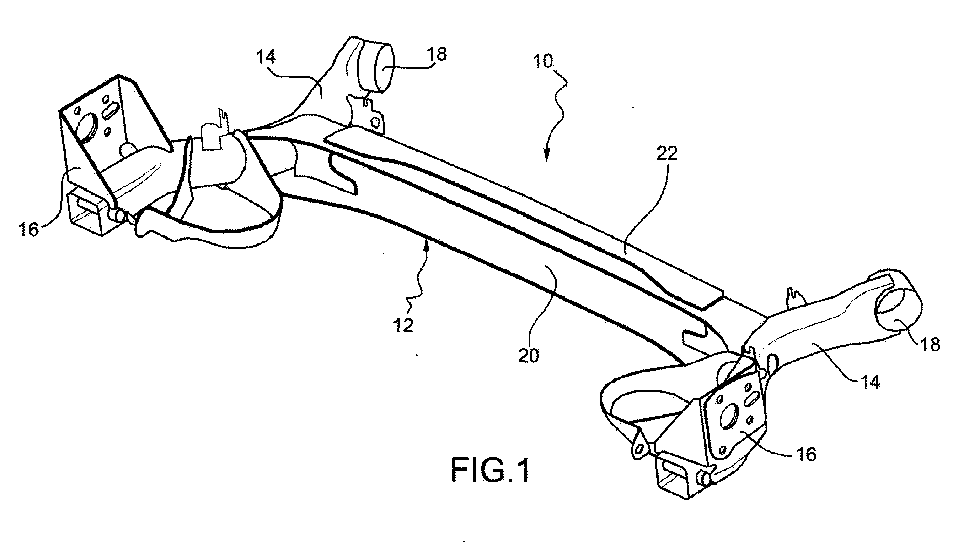

With reference first to Figure 1, a twist-beam axle for a rear suspension of a motor vehicle is generally indicated 10 and comprises in per-se-known manner a middle cross-member 12 which can be deformed under torsion in a controlled manner and a pair of trailing arms 14 (only one of which is illustrated in Figure 1) which are rigidly connected each to a respective side end of the cross-member 12. The trailing arms 14 carry, in per-se-known manner, support members 16 for the axles of the rear wheels of the vehicle (not shown) and attachment members 18 (in the illustrated example simply a bush seating) for articulated connection of the twist-beam axle 10 to the vehicle structure (also not illustrated).

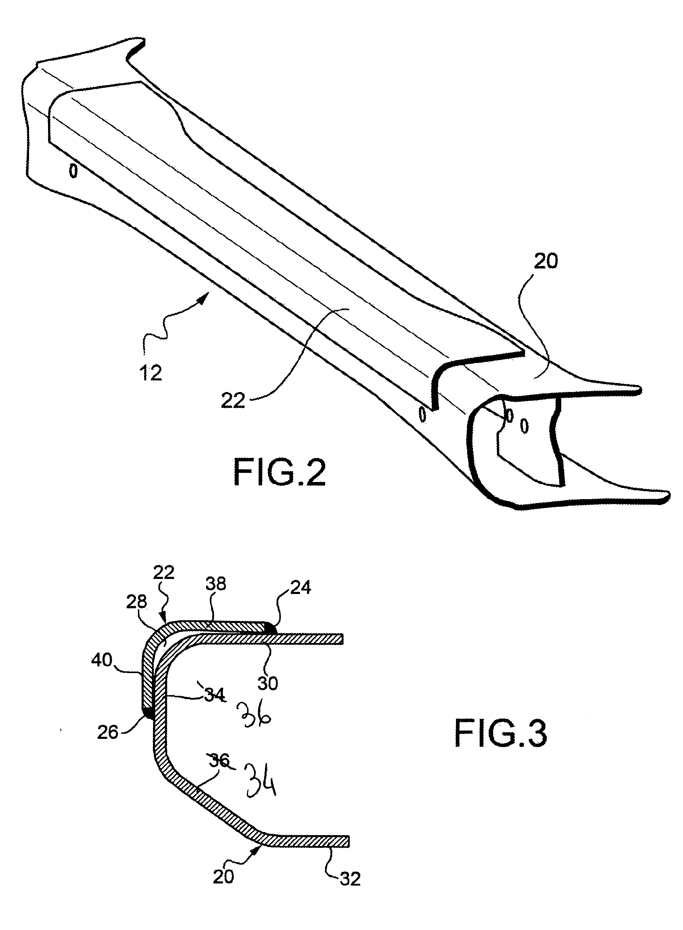

With reference in particular to Figure 2, the cross-member 12 basically consists in first and second beam elements 20 and 22 which are both made as sheet metal pieces of open cross-section obtained by stamping or other plastic deformation process. The two beam elements 20 and 22 are suitably shaped and rigidly connected to each other by means of a pair of welded joints 24 and 26 so as to enclose a chamber 28 of closed cross-section, the shape and sizes of which are such as to provide the cross-member 12 with the desired torsional stiffness.

The first beam element 20 extends throughout the length of the cross-member and has a cross-section with a pair of parallel bases 30 and 32, that is to say, a longer base and a shorter base, respectively, a first side 34 adjacent to the shorter base 32 and oriented obliquely thereto, and a second side 36 joining the first side 34 and the longer base 30. In the embodiment shown in Figures 1 to 3, the two longer and shorter bases 30 and 32 are oriented horizontally and are an upper base and a lower base, respectively, whereas the second side 36 is oriented vertically.

The second beam element 22 extends preferably only through part of the length of the cross-member and has a substantially L-shaped cross-section, with a first side 38 which is oriented parallel to the two bases 30 and 32 of the first beam element 20 and is secured to the longer base 30 and with a second side 40 which is oriented parallel to the second vertical side 36 of the first beam element 20 and is secured thereto.

The closed chamber 28 is thus defined between the joining area of the longer base 30 with the second vertical side 36 of the first beam element 20 and the joining area between the two sides 34 and 36 of the second beam element 22.

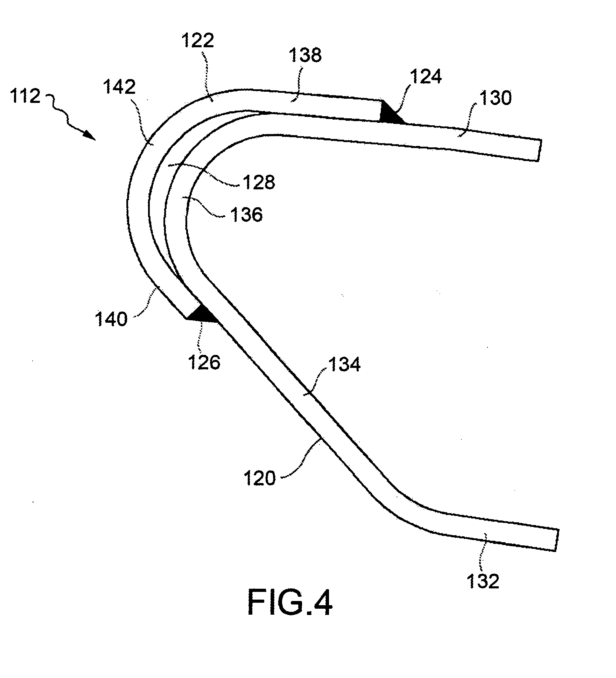

A cross-section of the cross-member according to another preferred embodiment of the invention is shown in Figure 4, where parts and elements identical or corresponding to those of Figure 3 have been given the same reference numerals, increased by 100.

With reference to Figure 4, a cross-member 112 consists in first and second beam elements 120 and 122, which are both made as sheet metal pieces of open cross-section obtained by stamping or other plastic deformation process. The two beam elements 120 and 122 are suitably shaped and rigidly connected to each other by means of a pair of welded joints 124 and 126 so as to enclose a chamber 128 of closed cross-section, the shape and sizes of which are such as to provide the cross-member 112 with the desired torsional stiffness.

The first beam element 120 has a cross-section with a pair of parallel bases 130 and 132, that is to say, a longer base and a shorter base, respectively, with a first side 134 adjacent to the shorter base 132 and oriented obliquely thereto, and with a second curved side 136 joining the first side 134 with the longer base 130. The two longer and shorter bases 130 and 132 are oriented horizontally and are an upper base and a lower base, respectively.

The second beam element 122 has a cross-section with a first side 138 which is oriented parallel to the two bases 130 and 132 of the first beam element 120 and is secured to the longer base 130, a second side 140 which is oriented parallel to the first oblique side 134 of the first beam element 120 and is secured thereto, and with a third curved side 142 which joins the first and second sides 138 and 140 with each other. The closed cross-section chamber 128 is thus defined between the two curved sides 136 and 142 of the two beam elements 120 and 122.

The torsional stiffness of the cross-member can also be adjusted by properly choosing the material and thickness of the two beam elements. The second beam element may for instance be made of a material different from that of the first one. Moreover, one or both of the beam elements may be made of non-metal material, for instance of carbon fibre. As far as the fixing of the two beam elements is concerned, other methods than welding may be used, such as for instance gluing or riveting. Finally, the two beam elements may also be of different thickness from one another in order to obtain a reduction in the cost and weight of the cross-member, the performances remaining the same.

## Claims

1. Cross-member (12; 112) for a twist-beam axle rear suspension (10) for a motor vehicle, comprising first and second beam elements (20, 22; 120, 122) of open cross-section which are firmly secured to each other so as to enclose a chamber (28; 128) of closed cross-section, the shape and sizes of which are such as to provide the cross-member (12; 112) with the desired torsional stiffness, **characterized in that**
the cross-section of the first beam element (20; 120) has a pair of parallel bases (30, 32; 130, 132), that is to say, a longer base and a shorter base, respectively, a first side (34; 134) adjacent to the shorter base (32; 132) and oriented obliquely thereto, and a second side (36; 136) joining the first side (34; 134) with the longer base (30; 130), and **in that**
the cross-section of the second beam element (22; 122) has a first side (38; 138) which is oriented parallel to the two bases (30, 32; 130, 132) of the first beam element (20; 120) and is firmly secured to the longer base (30; 130) of the first beam element (20; 120), and a second side (40; 140) which is firmly secured to one of the two sides (34, 36; 134, 136) of the first beam element (20; 120).

2. Cross-member (12) according to claim 1, wherein the second side (36) of the first beam element (20) extends perpendicularly to the two bases (30, 32), the second side (40) of the second beam element (22) is oriented perpendicularly to the first side (38) and is secured to the second side (36) of the first beam element (20), in such a manner that the closed cross-section chamber (28) is defined between the joining area of the longer base (30) with the second side (36) of the first beam element (20) and the joining area between the two sides (38, 40) of the second beam element (22).

3. Cross-member (112) according to claim 1, wherein the second side (136) of the first beam element (120) is curved, the cross-section of the second beam element (122) has a third curved side (142) which joins the first and second sides (138, 140) with each other and the second side (140) of the second beam element (122) extends parallel to the first side (134) of the first beam element (120) and is secured thereto, in such a manner that the closed cross-section chamber (128) is defined between the two curved sides (136, 142) of the two beam elements (120, 122).

4. Cross-member (12; 112) according to any of the preceding claims, wherein the first beam element (20; 120) extends throughout the length of the cross-member, whereas the second beam element (22; 122) extends through only part of the length of the cross-member.

5. Cross-member (12; 112) according to any of the preceding claims, wherein one of said first and second beam elements (20, 22; 120, 122) is made of sheet metal.

6. Cross-member (12; 112) according to claim 5, wherein both the beam elements (20, 22; 120, 122) are made of sheet metal.

7. Cross-member (12; 112) according to claim 6, wherein the first and second beam elements (20, 22; 120, 122) are obtained by stamping.

8. Cross-member (12; 112) according to claim 5, wherein the other of said first and second beam elements (20, 22; 120, 122) is made of carbon fibre.

9. Cross-member (12; 112) according to any of the preceding claims, wherein said first and second beam elements (20, 22; 120, 122) are firmly secured to each other by welding, gluing or riveting.

10. Twist-beam axle rear suspension for a motor vehicle comprising a cross-member (12; 112) according to any of the preceding claims and a pair of trailing arms (14) mounted onto the opposite ends of the cross-member (12; 112).

## Patentansprüche

1. Querträger (12; 112) für eine Verbundlenker-Hinterachsaufhängung (10) für ein Kraftfahrzeug, der erste und zweite Trägerelemente (20, 22; 120, 122) mit einem offenen Querschnitt aufweist, die aneinander sicher befestigt sind, sodass sie eine Kammer (28; 128) mit einem geschlossenen Querschnitt, deren Form und Abmessungen dem Querlenker (12; 112) die gewünschte Verdrehsteifigkeit verleihen, einschließen, **dadurch gekennzeichnet, dass**
der Querschnitt des ersten Trägerelements (20; 120) ein Paar parallele Basisstücke (30, 32; 130, 132), das heißt ein längeres Basisstück bzw. ein kürzeres Basisstück, hat, wobei eine erste Seite (34; 134) an das kürzere Basisstück (32; 132) angrenzt und schräg dazu ausgerichtet ist und eine zweite Seite (36; 136) sich an die erste Seite (34; 134) mit dem längeren Basisstück (30; 130) anschließt, und dadurch, dass
der Querschnitt des zweiten Trägerelements (22; 122) eine erste Seite (38; 138), die parallel zu den zwei Basisstücken (30, 32; 130, 132) des ersten Trägerelements (20; 120) ausgerichtet und an dem längeren Basisstück (30; 130) des ersten Trägerelements (20; 120) sicher befestigt ist, und eine zweite Seite (40; 140), die an einer der zwei Seiten (34, 36; 134, 136) des ersten Trägerelements (20; 120) sicher befestigt ist, besitzt.

2. Querträger (12) nach Anspruch 1, wobei die zweite Seite (36) des ersten Trägerelements (20) sich senkrecht zu den zwei Basisstücken (30, 32) erstreckt, die zweite Seite (40) des zweiten Trägerelements (22) senkrecht zu der ersten Seite (38) ausgerichtet und an der zweiten Seite (36) des ersten Trägerelements (20) in einer Weise befestigt ist, dass die Kammer (28) mit dem geschlossenen Querschnitt zwischen dem Anschlussbereich des längeren Basisstücks (30) mit der zweiten Seite (36) des ersten Trägerelements (20) und dem Anschlussbereich zwischen den zwei Seiten (38, 40) des zweiten Trägerelements (22) festgelegt wird.

3. Querträger (112) nach Anspruch 1, wobei die zweite Seite (136) des ersten Trägerelements (120) gekrümmt ist, der Querschnitt des zweiten Trägerelements (122) eine dritte gekrümmte Seite (142) hat, die die erste und die zweite Seite (138, 140) miteinander verbindet und die zweite Seite (140) des zweiten Trägerelements (122) sich parallel zu der ersten Seite (134) des ersten Trägerelements (120) erstreckt und daran in einer Weise befestigt ist, dass die Kammer (128) mit dem geschlossenen Querschnitt zwischen den zwei gekrümmten Seiten (136, 142) der zwei Trägerelemente (120, 122) festgelegt wird.

4. Querträger (12; 112) nach einem der vorangegangenen Ansprüche, wobei das erste Trägerelement (20; 120) sich über die gesamte Länge des Querträgers erstreckt, während das zweite Trägerelement (22; 122) sich nur über einen Teil der Länge des Querträgers erstreckt.

5. Querträger (12; 112) nach einem der vorangegangenen Ansprüche, wobei das erste oder das zweite Trägerelement (20, 22; 120, 122) aus Metallblech hergestellt ist.

6. Querträger (12; 112) nach Anspruch 5, wobei beide Trägerelemente (20, 22; 120, 122) aus Metallblech hergestellt sind.

7. Querträger (12; 112) nach Anspruch 6, wobei das erste und das zweite Trägerelement (20, 22; 120, 122) durch Stanzen erhalten werden.

8. Querträger (12; 112) nach Anspruch 5, wobei das andere des ersten und des zweiten Trägerelements (20, 22; 120, 122) aus Kohlenstofffaser hergestellt ist.

9. Querträger (12; 112) nach einem der vorangegangenen Ansprüche, wobei das erste und das zweite Trägerelement (20, 22; 120, 122) durch Schweißen, Kleben oder Nieten sicher aneinander befestigt sind.

10. Verbundlenker-Hinterachsaufhängung für ein Kraftfahrzeug, die einen Querträger (12; 112) nach einem der vorangegangenen Ansprüche und ein Paar Längslenker (14), die an den gegenüberliegenden Enden des Querträgers (12; 112) montiert sind, aufweist.

## Revendications

1. Traverse (12 ; 112) pour une suspension arrière à essieu de torsion (10) pour un véhicule automobile, comprenant des premier et deuxième éléments de poutre (20, 22 ; 120, 122) à section transversale ouverte qui sont solidement fixés l'un à l'autre de manière à enfermer une chambre (28 ; 128) à section transversale fermée, dont la forme et les dimensions sont telles que la traverse (12 ; 112) est dotée de la rigidité en torsion souhaitée, **caractérisée en ce que**
la section transversale du premier élément de poutre (20 ; 120) comporte une paire de bases parallèles (30, 32 ; 130, 132), à savoir, une base longue et une base courte, respectivement, un premier côté (34 ; 134) adjacent à la base courte (32 ; 132) et orienté de façon oblique par rapport à celle-ci, et un deuxième côté (36 ; 136) raccordant le premier côté (34 ; 134) à la base longue (30 ; 130), et **en ce que**
la section transversale du deuxième élément de poutre (22 ; 122) comporte un premier côté (38 ; 138) qui est orienté de façon parallèle aux deux bases (30, 32 ; 130, 132) du premier élément de poutre (20 ; 120) et est solidement fixé à la base longue (30 ; 130) du premier élément de poutre (20 ; 120), et un deuxième côté (40 ; 140) qui est solidement fixé à l'un des deux côtés (34, 36 ; 134, 136) du premier élément de poutre (20 ; 120).

2. Traverse (12) selon la revendication 1, le deuxième côté (36) du premier élément de poutre (20) s'étendant perpendiculairement aux deux bases (30, 32), le deuxième côté (40) du deuxième élément de poutre (22) étant orienté de façon perpendiculaire par rapport au premier côté (38) et étant fixé au deuxième côté (36) du premier élément de poutre (20), de telle sorte que la chambre à section transversale fermée (28) est définie entre la zone de raccord de la base longue (30) au deuxième côté (36) du premier élément de poutre (20) et la zone de raccord entre les deux côtés (38, 40) du deuxième élément de poutre (22).

3. Traverse (112) selon la revendication 1, le deuxième côté (136) du premier élément de poutre (120) étant courbé, la section transversale du deuxième élément de poutre (122) ayant un troisième côté courbé (142) qui raccorde les premier et deuxième côtés (138, 140) l'un à l'autre et le deuxième côté (140) du deuxième élément de poutre (122) s'étendant parallèlement au premier côté (134) du premier élément de poutre (120) et étant fixé à celui-ci, de telle sorte que la chambre à section transversale fermée (128) est définie entre les deux côtés courbés (136, 142) des deux éléments de poutre (120, 122).

4. Traverse (12 ; 112) selon l'une quelconque des revendications précédentes, le premier élément de poutre (20 ; 120) s'étendant sur toute la longueur de la traverse, tandis que le deuxième élément de poutre (22 ; 122) s'étend seulement sur une partie de la longueur de la traverse.

5. Traverse (12 ; 112) selon l'une quelconque des revendications précédentes, l'un desdits premier et deuxième éléments de poutre (20, 22 ; 120, 122) étant fait en tôle.

6. Traverse (12 ; 112) selon la revendication 5, les deux éléments de poutre (20, 22 ; 120, 122) étant faits en tôle.

7. Traverse (12 ; 112) selon la revendication 6, les premier et deuxième éléments de poutre (20, 22 ; 120, 122) étant obtenus par emboutissage.

8. Traverse (12 ; 112) selon la revendication 5, l'autre desdits premier et deuxième éléments de poutre (20, 22 ; 120, 122) étant fait en fibre de carbone.

9. Traverse (12 ; 112) selon l'une quelconque des revendications précédentes, lesdits premier et deuxième éléments de poutre (20, 22 ; 120, 122) étant solidement fixés l'un à l'autre par soudage, collage ou rivetage.

10. Suspension arrière à essieu de torsion pour un véhicule automobile comprenant une traverse (12 ; 112) selon l'une quelconque des revendications précédentes et une paire de bras tirés (14) montés sur les extrémités opposées de la traverse (12 ; 112).
